# EUROPEAN PATENT SPECIFICATION

(11) **EP 4 625 857 B1**
(45) Date of publication and mention of the grant of the patent: **10.06.2026**
(21) Application number: 24169426.4
(22) Date of filing: 10.04.2024
(51) Int. Cl.: H04L 1/00, H04W 28/00

(54) **METHOD FOR PERFORMING COLLISION PROCESSING WITH AID OF MEDIUM ACCESS CONTROL LAYER DETECTION IN A WIRELESS COMMUNICATION SYSTEM, AND ASSOCIATED APPARATUS**
VERFAHREN ZUR KOLLISIONSVERARBEITUNG MITHILFE DER ERKENNUNG EINER MEDIUMZUGANGSSTEUERUNGSSCHICHT IN EINEM DRAHTLOSKOMMUNIKATIONSSYSTEM UND ZUGEHÖRIGE VORRICHTUNG
PROCÉDÉ DE RÉALISATION D'UN TRAITEMENT DE COLLISION À L'AIDE D'UNE DÉTECTION DE COUCHE DE CONTRÔLE D'ACCÈS AU SUPPORT DANS UN SYSTÈME DE COMMUNICATION SANS FIL, ET APPAREIL ASSOCIÉ

(30) Priority: 29.03.2024 US 202418621120
(43) Date of publication of application: 01.10.2025
(73) Proprietor: MediaTek Inc., Hsin-Chu 300 (TW)
(72) Inventor: WU, Tsung-Hsuan, 30078 Hsinchu City (TW); HSU, Chia-Jung, 30078 Hsinchu City (TW); KUO, Ching-Yu, 30078 Hsinchu City (TW); CHEN, Kuo-Wei, 30078 Hsinchu City (TW)
(74) Representative: Hoefer & Partner Patentanwälte mbB

(56) References cited:
- US-A1- 2007 171 933
- US-A1- 2023 344 551

## Description

### Background

The present invention is related to communication control, and more particularly, to a method for performing collision processing such as physical layer (PHY) collision processing with aid of medium access control (MAC) layer detection in a wireless communication system, and associated apparatus such as a wireless transceiver device (e.g., an access point (AP) device or a station (STA) device) in the wireless communication system.

According to the related art, a wireless communication system such as a Wi-Fi system may be very crowded in many circumstances, and the performance may be degraded severely in some scenarios such as dense overlapping basic service set (OBSS) scenarios. For example, when a wireless transceiver device starts receiving a first packet and there is a second packet from an OBSS, the wireless transceiver device may be forced to abort receiving the first packet due to an improper rule, causing the overall performance of the wireless transceiver device to be degraded. No proper suggestion is found in the related art. US Patent Application Publication No. US 2023/0344551 A1 teaches a terminal apparatus that reads a PHY header of a transmission frame and a higher layer processor that transfers a result of decoding a physical layer in a signal demodulator to a MAC layer as described in this document, failing to provide a complete solution to the problems. Thus, a novel method and associated architecture are needed for solving the problems without introducing any side effect or in a way that is less likely to introduce a side effect.

### Summary

It is an objective of the present invention to provide a method for performing collision processing such as PHY collision processing with aid of MAC layer detection in a wireless communication system, and associated apparatus such as wireless transceiver devices (e.g., one or more AP devices and one or more non-access-point (non-AP) STA devices) in the wireless communication system, in order to solve the above-mentioned problems. A method, an AP device, and a non-AP STA device according to the invention are defined in the independent claims. The dependent claims define preferred embodiments thereof. In particular, the AP device, and the non-AP STA device according to the invention are adapted to perform the method steps as defined in the independent method claim and, in preferred embodiments, any one of the dependent method claims.

At least one embodiment of the present invention provides a method for performing collision processing such as PHY collision processing with aid of MAC layer detection in a wireless communication system, where the wireless communication system may comprise a wireless transceiver device (e.g., a first AP device) and at least another device (e.g., a non-AP STA device or a second AP device). The method may comprise: performing PHY header detection on a first PHY protocol data unit (PPDU) received via at least one communication circuit within the wireless transceiver device from the other device; performing payload decoding on the first PPDU to obtain payload information from the first PPDU; sending the payload information of the first PPDU from a PHY receiving (Rx) module within the at least one communication circuit to a MAC layer Rx module within the at least one communication circuit via a bus, for performing the collision processing; and in response to collision between the first PPDU and another PPDU being detected, performing the collision processing according to a first detection result from the MAC layer Rx module, for determining whether to continue performing the payload decoding on the first PPDU.

At least one embodiment of the present invention provides an AP device for performing collision processing such as PHY collision processing with aid of MAC layer detection in a wireless communication system such as that mentioned above, where the AP device may be one of multiple devices within the wireless communication system. The AP device may comprise a processing circuit that is arranged to control operations of the AP device. The AP device may further comprise at least one communication control circuit that is coupled to the processing circuit and arranged to perform communication control, where the aforementioned at least one communication control circuit is arranged to perform wireless communication operations with at least another device (e.g., a non-AP STA device or another AP device) among the multiple devices within the wireless communication system for the AP device. In addition, the AP device may be arranged to perform PHY header detection on a first PPDU received via the aforementioned at least one communication circuit from the other device; the AP device may be arranged to perform payload decoding on the first PPDU to obtain payload information from the first PPDU; the AP device may be arranged to send the payload information of the first PPDU from a PHY Rx module within the at least one communication circuit to a MAC layer Rx module within the at least one communication circuit via a bus, for performing the collision processing; and in response to collision between the first PPDU and another PPDU being detected, the AP device may be arranged to perform the collision processing according to a first detection result from the MAC layer Rx module, for determining whether to continue performing the payload decoding on the first PPDU.

At least one embodiment of the present invention provides a non-AP STA device for performing collision processing such as PHY collision processing with aid of MAC layer detection in a wireless communication system such as that mentioned above, where the non-AP STA device may be one of multiple devices within the wireless communication system. The non-AP STA device may comprise a processing circuit that is arranged to control operations of the non-AP STA device. The non-AP STA device may further comprise at least one communication control circuit that is coupled to the processing circuit and arranged to perform communication control, where the aforementioned at least one communication control circuit is arranged to perform wireless communication operations with at least another device (e.g., a first AP device) among the multiple devices within the wireless communication system for the non-AP STA device. In addition, the non-AP STA device may be arranged to perform PHY header detection on a first PPDU received via the aforementioned at least one communication circuit from the other device; the non-AP STA device may be arranged to perform payload decoding on the first PPDU to obtain payload information from the first PPDU; the non-AP STA device may be arranged to send the payload information of the first PPDU from a PHY Rx module within the at least one communication circuit to a MAC layer Rx module within the at least one communication circuit via a bus, for performing the collision processing; and in response to collision between the first PPDU and another PPDU being detected, the non-AP STA device may be arranged to perform the collision processing according to a first detection result from the MAC layer Rx module, for determining whether to continue performing the payload decoding on the first PPDU.

It is an advantage of the present invention that, through proper design, the present invention method, as well as the associated apparatus such as the wireless transceiver devices (e.g., the one or more AP devices and the one or more non-AP STA devices) in the wireless communication system, can perform MAC-layer-aided collision processing such as MAC-layer-aided PHY collision processing to increase the probability of successful decoding of received PPDUs, in order to enhance the system performance in dense wireless scenarios. In addition, the present invention method and apparatus can solve the related art problems without introducing any side effect or in a way that is less likely to introduce a side effect.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram of a wireless communication system according to an embodiment of the present invention.
FIG. 2 illustrates a MAC-address-aware collision processing control scheme of a method for performing collision processing with aid of MAC layer detection in a wireless communication system according to an embodiment of the present invention, where sub-diagrams (a) and (b) of FIG. 2 may indicate the associated operations regarding different MAC-header-related detection results.
FIG. 3 illustrates a multi-layer hybrid control scheme of the method according to an embodiment of the present invention.
FIG. 4 illustrates an early response control scheme of the method according to an embodiment of the present invention.
FIG. 5 illustrates a first MAC-layer-aided collision processing and signaling control scheme of the method according to an embodiment of the present invention.
FIG. 6 illustrates a second MAC-layer-aided collision processing and signaling control scheme of the method according to an embodiment of the present invention.
FIG. 7 illustrates, in the lower half part thereof, some processing results of the multi-layer hybrid control scheme shown in FIG. 3 according to an embodiment of the present invention, where some processing results of a single-layer PHY control scheme may be illustrated in the upper half part of FIG. 7 for better comprehension.
FIG. 8 illustrates a working flow of the method according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

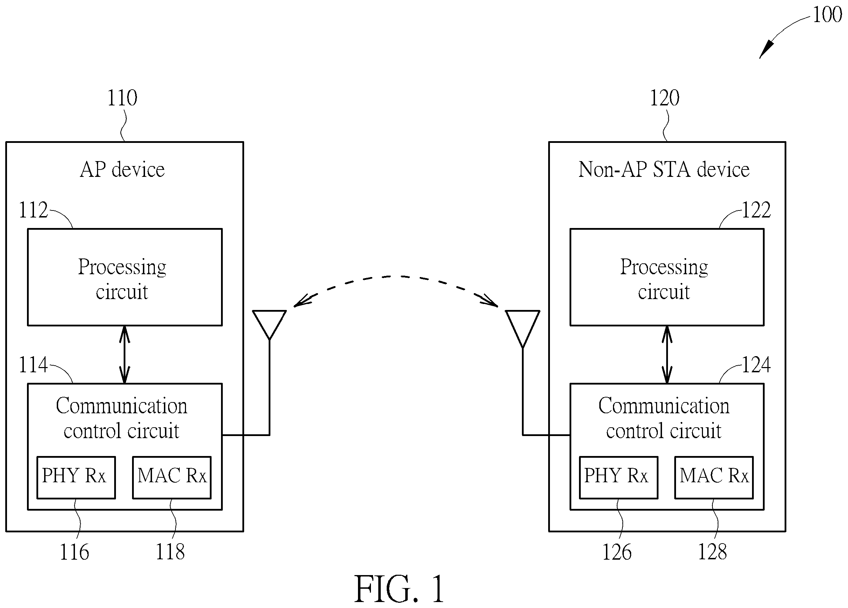

FIG. 1 is a diagram of a wireless communication system 100 according to an embodiment of the present invention. For better comprehension, the wireless communication system 100, as well as any wireless transceiver device #n among multiple wireless transceiver devices #1, ... and #N therein, may be compatible or backward-compatible to one or more versions of the Institute of Electrical and Electronics Engineers (IEEE) 802.11 standards, but the present invention is not limited thereto. Regarding the multiple wireless transceiver devices #1, ... and #N within the wireless communication system 100, a wireless transceiver device among them may be implemented as an AP device 110, and another transceiver device among them may be implemented as a non-AP STA device 120, but the present invention is not limited thereto. For example, two or more wireless transceiver devices among the multiple wireless transceiver devices #1, ... and #N may be implemented as multiple AP devices {110}. For another example, two or more wireless transceiver devices among the multiple wireless transceiver devices #1, ... and #N may be implemented as multiple non-AP STA devices {120}. In some examples, two or more wireless transceiver devices among the multiple wireless transceiver devices #1, ... and #N may be implemented as multiple AP devices { 110}, and two or more other wireless transceiver devices among the multiple wireless transceiver devices #1, ... and #N may be implemented as multiple non-AP STA devices {120}.

As shown in FIG. 1, the AP device 110 may comprise a processing circuit 112, at least one communication control circuit (e.g., one or more communication control circuits), which may be collectively referred to as the communication control circuit 114, and at least one antenna (e.g., one or more antennas) of the communication control circuit 114, and the non-AP STA device 120 may comprise a processing circuit 122, at least one communication control circuit (e.g., one or more communication control circuits), which may be collectively referred to as the communication control circuit 124, and at least one antenna (e.g., one or more antennas) of the communication control circuit 124. As shown in FIG. 1, the communication control circuit 114 may comprise multiple sub-circuits such as a PHY Rx module 116 and a MAC layer Rx module 118 (respectively labeled "PHY Rx" and "MAC Rx" for brevity), and the communication control circuit 124 may comprise multiple sub-circuits such as a PHY Rx module 126 and a MAC layer Rx module 128 (respectively labeled "PHY Rx" and "MAC Rx" for brevity). In the architecture shown in FIG. 1, the processing circuit 112 can be arranged to control operations of the AP device 110, and the communication control circuit 114 can be arranged to perform communication control, and more particularly, perform wireless communication operations with the network (or at least one other device therein such as the non-AP STA device 120) for the AP device 110. In addition, the processing circuit 122 can be arranged to control operations of the non-AP STA device 120, and the communication control circuit 124 can be arranged to perform communication control, and more particularly, perform wireless communication operations with the network (or at least one other device therein such as the AP device 110) for the non-AP STA device 120.

According to some embodiments, the processing circuit 112 can be implemented by way of at least one processor/microprocessor, at least one random access memory (RAM), at least one bus, etc., and the communication control circuit 114 can be implemented by way of at least one wireless network control circuit and at least one wired network control circuit, but the present invention is not limited thereto. Examples of the AP device 110 may include, but are not limited to: a Wi-Fi router. In addition, the processing circuit 122 can be implemented by way of at least one processor/microprocessor, at least one RAM, at least one bus, etc., and the communication control circuit 124 can be implemented by way of at least one wireless network control circuit, but the present invention is not limited thereto. Examples of the non-AP STA device 120 may include, but are not limited to: a multifunctional mobile phone, a laptop computer, an all-in-one computer and a wearable device.

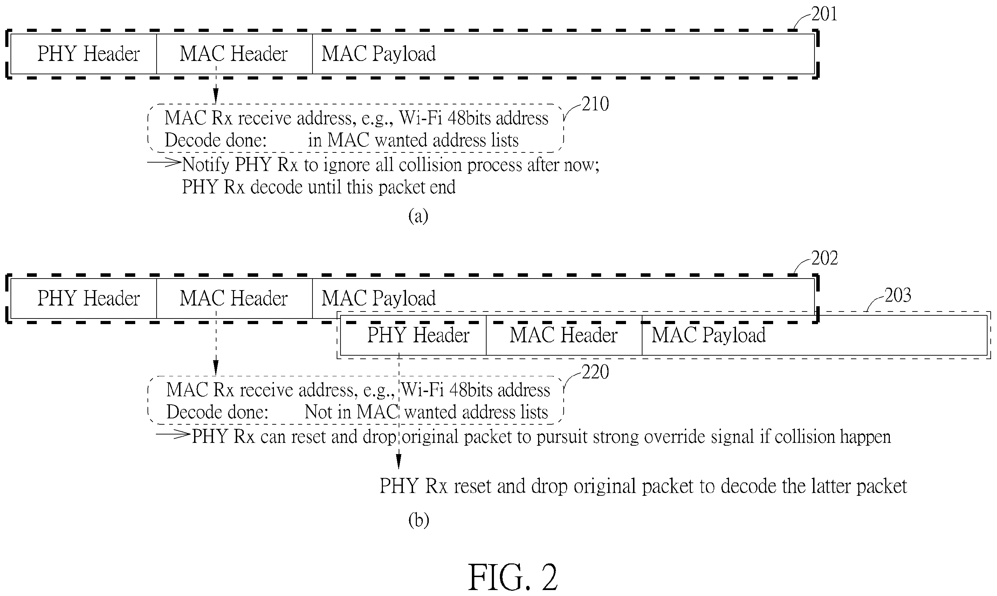

FIG. 2 illustrates a MAC-address-aware collision processing control scheme of a method for performing collision processing such as PHY collision processing with aid of MAC layer detection in a wireless communication system according to an embodiment of the present invention, where sub-diagrams (a) and (b) of FIG. 2 may indicate the associated operations regarding different MAC-header-related detection results. The method can be applied to the wireless transceiver device #n such as the AP device 110, and can be applied to at least another wireless transceiver device #n', such as the non-AP STA device 120 and/or another AP device among the multiple AP devices {110}, for performing collision processing with aid of MAC layer detection in the wireless communication system 100, and the associated operations of the wireless communication system 100 operating according to the method may comprise:
(1) the wireless communication system 100 may utilize the AP device 110 (or the communication control circuit 114 therein) to perform PHY header detection on a first PPDU received via the communication circuit 114 from the non-AP STA device 120;
(2) the wireless communication system 100 may utilize the AP device 110 (or the communication control circuit 114 therein) to perform payload decoding on the first PPDU to obtain payload information from the first PPDU;
(3) the wireless communication system 100 may utilize the AP device 110 (or the communication control circuit 114 therein) to send the payload information of the first PPDU from the PHY Rx module 116 within the communication circuit 114 to the MAC layer Rx module 118 within the communication circuit 114 via a bus (e.g., a data bus) between the PHY Rx module 116 and the MAC layer Rx module 118, for performing the collision processing; and
(4) in response to collision between the first PPDU and another PPDU (e.g., an OBSS PPDU) being detected, the wireless communication system 100 may utilize the AP device 110 (or the communication control circuit 114 therein) to perform the collision processing according to a first detection result from the MAC layer Rx module 118;
where the first detection result may represent a MAC-header-related detection result. For example, the wireless transceiver device #n such as the AP device 110 may utilize the MAC layer Rx module 118 to perform MAC header decoding on the payload information of the first PPDU to obtain a MAC header from the payload information of the first PPDU and perform a MAC address detection on the MAC header to generate the MAC-header-related detection result, for being returned to the PHY Rx module 116, and utilize the PHY Rx module 116 to perform the collision processing according to the MAC-header-related detection result. In addition, the MAC address detection may comprise detecting whether a first address in the MAC header is in at least one predetermined wanted address list or not, and the wireless transceiver device #n such as the AP device 110 may utilize the MAC layer Rx module 118 to return the MAC-header-related detection result to the PHY Rx module 116, for indicating whether the first address in the MAC header is in the aforementioned at least one predetermined wanted address list or not. For example, the MAC layer Rx module may be arranged to obtain the first address from an Address One (Address 1) field within the MAC header.

As shown in FIG. 2, the wireless communication system 100 (or the AP device 110 and the non-AP STA device 120 therein) may operate according to the MAC-address-aware collision processing control scheme to achieve better overall performance, and more particularly, perform MAC-layer-aided collision processing with the sub-circuits respectively corresponding to the PHY and the MAC layer. In the sub-diagram (a) of FIG. 2, the PPDU 201 may be taken as an example of the first PPDU. The PPDU 201 may comprise a PHY preamble and/or a PHY header (labeled "PHY header" for brevity), and the subsequent parts such as the MAC header and the MAC payload may be regarded as the payload information coming after the PHY header of the PPDU 201 in the PHY. Based on the MAC-address-aware collision processing control scheme, the wireless transceiver device #n such as the AP device 110 may perform the associated operations such as the operations 210, and more particularly, utilize the MAC layer Rx module 118 to receive an address (e.g., a Wi-Fi 48 bits address) carried by the MAC header within the PPDU 201 from the PHY Rx module 116, and obtain a detection result generated by the MAC layer Rx module 118 after the decode operation of the MAC layer Rx module 118 is done, where detection result may indicate that the address (e.g., the Wi-Fi 48 bits address) carried by the MAC header within the PPDU 201 is in the aforementioned at least one predetermined wanted address list such as one or more MAC wanted address lists. In addition, the wireless transceiver device #n such as the AP device 110 may utilize the MAC layer Rx module 118 to notify the PHY Rx module 116 of the detection result to make the PHY Rx module 116 ignore all collision process after now, and utilize the PHY Rx module 116 to decode (or perform the payload decoding) until this packet such as the PPDU 201 ends.

In the sub-diagram (b) of FIG. 2, the PPDU 202 may be taken as an example of the first PPDU, and the PPDU 203 may be taken as an example of the other PPDU. Any PPDU among the PPDUs 202 and 203 may comprise a PHY preamble and/or a PHY header (labeled "PHY header" for brevity), and the subsequent parts such as the MAC header and the MAC payload may be regarded as the payload information coming after the PHY header of the aforementioned any PPDU in the PHY. Based on the MAC-address-aware collision processing control scheme, the wireless transceiver device #n such as the AP device 110 may perform the associated operations such as the operations 220, and more particularly, utilize the MAC layer Rx module 118 to receive an address (e.g., a Wi-Fi 48 bits address) carried by the MAC header within the PPDU 202 from the PHY Rx module 116, and obtain a detection result generated by the MAC layer Rx module 118 after the decode operation of the MAC layer Rx module 118 is done, where detection result may indicate that the address (e.g., the Wi-Fi 48 bits address) carried by the MAC header within the PPDU 202 is not in the aforementioned at least one predetermined wanted address list such as the one or more MAC wanted address lists. For example, the PHY Rx module 116 can reset and drop the original packet such as the PPDU 202 to pursuit strong override signal if any collision such as the collision between the first PPDU and the other PPDU happens. In addition, in response to the aforementioned any collision such as the collision between the PPDUs 202 and 203 being detected, the wireless transceiver device #n such as the AP device 110 may utilize the MAC layer Rx module 118 to notify the PHY Rx module 116 of the detection result to make the PHY Rx module 116 reset and drop the original packet such as the PPDU 202 to decode the latter packet such as the PPDU 203.

As described above, the AP device 110 can be taken as an example of the wireless transceiver device #n, and the non-AP STA device 120 and/or the other AP device among the multiple AP devices {110} can be taken as examples of the other wireless transceiver device #n', but the present invention is not limited thereto. When the non-AP STA device 120 and the AP device 110 are taken as examples of the wireless transceiver device #n and the other wireless transceiver device #n', respectively, the associated operations of the wireless communication system 100 operating according to the method may comprise:
(1) the wireless communication system 100 may utilize the non-AP STA device 120 (or the communication control circuit 124 therein) to perform the PHY header detection on another first PPDU received via the communication circuit 124 from the AP device 110;
(2) the wireless communication system 100 may utilize the non-AP STA device 120 (or the communication control circuit 124 therein) to perform the payload decoding on the other first PPDU to obtain payload information from the other first PPDU;
(3) the wireless communication system 100 may utilize the non-AP STA device 120 (or the communication control circuit 124 therein) to send the payload information of the other first PPDU from the PHY Rx module 126 within the communication circuit 124 to the MAC layer Rx module 128 within the communication circuit 124 via a bus (e.g., a data bus) between the PHY Rx module 126 and the MAC layer Rx module 128, for performing the collision processing; and
(4) in response to collision between the other first PPDU and another PPDU (e.g., another OBSS PPDU) being detected, the wireless communication system 100 may utilize the non-AP STA device 120 (or the communication control circuit 124 therein) to perform the collision processing according to another first detection result from the MAC layer Rx module 128;
where the other first detection result may represent another MAC-header-related detection result. For example, the wireless transceiver device #n such as the non-AP STA device 120 may utilize the MAC layer Rx module 128 to perform the MAC header decoding on the payload information of the other first PPDU to obtain a MAC header from the payload information of the other first PPDU and perform the MAC address detection on the MAC header to generate the other MAC-header-related detection result, for being returned to the PHY Rx module 126, and utilize the PHY Rx module 126 to perform the collision processing according to the other MAC-header-related detection result. In addition, the MAC address detection may comprise detecting whether another first address in the MAC header is in at least one predetermined wanted address list or not, and the wireless transceiver device #n such as the non-AP STA device 120 may utilize the MAC layer Rx module 128 to return the other MAC-header-related detection result to the PHY Rx module 126, for indicating whether the other first address in the MAC header is in the aforementioned at least one predetermined wanted address list or not. For example, the MAC layer Rx module may be arranged to obtain the other first address from the Address 1 field within the MAC header.

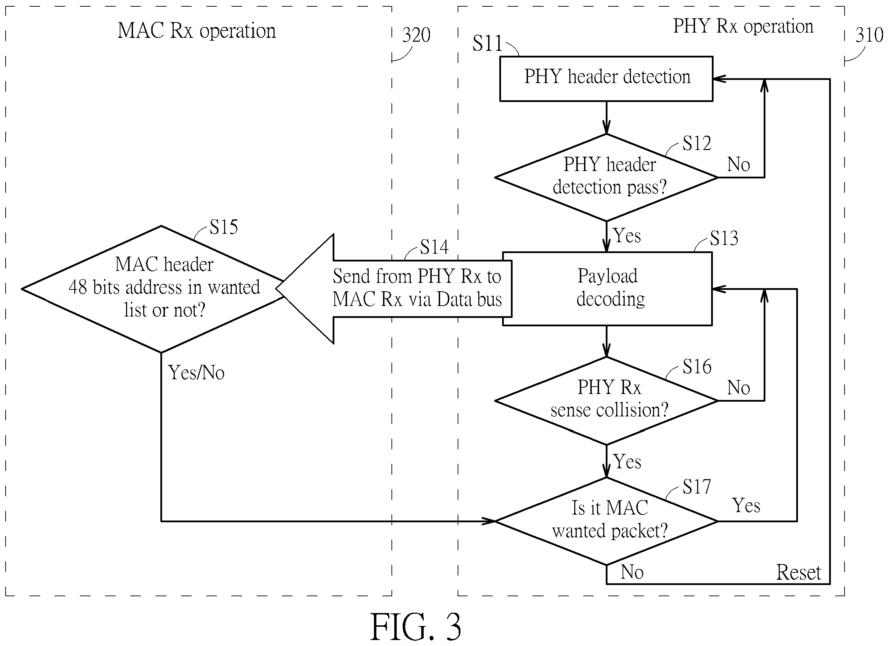

FIG. 3 illustrates a multi-layer hybrid control scheme of the method according to an embodiment of the present invention. The wireless transceiver device #n such as the AP device 110 may operate according to the multi-layer hybrid control scheme to perform the associated operations, and more particularly, perform the PHY Rx operations 310 and the MAC Rx operations 320 with the PHY Rx module 116 and the MAC layer Rx module 118, respectively, where the AP device 110 can be taken as an example of the wireless transceiver device #n, and the non-AP STA device 120 and/or the other AP device among the multiple AP devices {110} can be taken as examples of the other wireless transceiver device #n', but the present invention is not limited thereto.

In Step S11, the AP device 110 (or the communication control circuit 114 therein) may utilize the PHY Rx module 116 to perform the PHY header detection on a current PPDU (e.g., the first PPDU) received via the communication circuit 114 from the non-AP STA device 120.

In Step S12, the AP device 110 (or the communication control circuit 114 therein) may utilize the PHY Rx module 116 to determine whether the PHY header detection is successful for obtaining the PHY header of the current PPDU (e.g., the first PPDU) mentioned in Step S11 (labeled "PHY header detection pass" for brevity). If Yes, Step S13 is entered; if No, Step S11 is entered.

In Step S13, the AP device 110 (or the communication control circuit 114 therein) may utilize the PHY Rx module 116 to perform the payload decoding on the current PPDU (e.g., the first PPDU), and more particularly, start performing the payload decoding on the current PPDU (e.g., the first PPDU) in order to obtain the payload information from the current PPDU.

In Step S14, the AP device 110 (or the communication control circuit 114 therein) may utilize the PHY Rx module 116 to send the payload information of the current PPDU (e.g., the first PPDU) from the PHY Rx module 116 to the MAC layer Rx module 118 via the bus (e.g., the data bus) between the PHY Rx module 116 and the MAC layer Rx module 118, for performing the collision processing. For example, at least one portion of the operation of Step S13 and at least one portion of the operation of Step S14 may be performed at the same time. More particularly, before completing of the operation of Step S13, the PHY Rx module 116 may start sending the payload information of the current PPDU (e.g., the first PPDU) from the PHY Rx module 116 to the MAC layer Rx module 118 via the bus when obtaining a portion of the payload information.

In Step S15, the AP device 110 (or the communication control circuit 114 therein) may utilize the MAC layer Rx module 118 to perform the MAC header decoding on the payload information of the current PPDU (e.g., the first PPDU) to obtain a MAC header from the payload information of the current PPDU (e.g., the first PPDU) and perform the MAC address detection on the MAC header, in order to determine whether an address (e.g., a MAC header 48 bits address) carried by the MAC header is in the aforementioned at least one predetermined wanted address list or not (labeled "MAC header 48 bits address in wanted list or not" for brevity), for generate the latest MAC-header-related detection result, for being returned to the PHY Rx module 116. For example, the latest MAC-header-related detection result may indicate that address (e.g., the MAC header 48 bits address) carried by the MAC header is in the aforementioned at least one predetermined wanted address list or not (labeled "Yes/No" for brevity). As a result, the PHY Rx module 116 may perform the collision processing according to the latest detection result (e.g., the first detection result) from the PHY Rx module 116, such as the latest MAC-header-related detection result.

In Step S16, the AP device 110 (or the communication control circuit 114 therein) may utilize the PHY Rx module 116 to determine whether any other PPDU such as any OBSS PPDU is detected (or received), causing a collision between the current PPDU and the aforementioned any other PPDU (labeled "PHY Rx sense collision" for brevity). If Yes, Step S17 is entered to perform the collision processing; if No, Step S13 is entered to continue performing the payload decoding on the current PPDU (e.g., the first PPDU).

In Step S17, in response to the collision between the current PPDU (e.g., the first PPDU) and the aforementioned any other PPDU (e.g., the aforementioned any OBSS PPDU) being detected, the AP device 110 (or the communication control circuit 114 therein) may utilize the PHY Rx module 116 to perform the collision processing according to the latest detection result such as the latest MAC-header-related detection result from the MAC layer Rx module 118, for determining whether the current PPDU (e.g., the first PPDU) is a wanted PPDU of the AP device 110 (or the communication control circuit 114), such as a PPDU needing to be processed by the AP device 110 or the communication control circuit 114, with the aid of the MAC layer detection (labeled "Is it MAC wanted packet" for brevity). If Yes, Step S13 is entered; if No, Step S11 is entered.

More particularly, during performing the collision processing according to the latest detection result such as the latest MAC-header-related detection result from the MAC layer Rx module 118, if the latest detection result indicates that an address (e.g., the first address of the Address 1 field) in the MAC header within the payload information of the current PPDU (e.g., the first PPDU) is in the aforementioned at least one predetermined wanted address list, the AP device 110 (or the communication control circuit 114 therein) may execute Step S13 to utilize the PHY Rx module 116 to continue performing the payload decoding on the current PPDU (e.g., the first PPDU); otherwise, the AP device 110 (or the communication control circuit 114 therein) may reset the PHY Rx operations 310 and the MAC Rx operations 320 and therefore abort the payload decoding of the current PPDU, and execute Step S11 to utilize the PHY Rx module 116 to start processing the other PPDU such as the aforementioned any other PPDU in order to start performing the PHY header detection on the other PPDU. For brevity, similar descriptions for this embodiment are not repeated in detail here.

For better comprehension, the method may be illustrated with the working flow shown in FIG. 3, but the present invention is not limited thereto. According to some embodiments, one or more steps may be added, deleted, or changed in the working flow shown in FIG. 3. More particularly, when the non-AP STA device 120 and the AP device 110 are taken as examples of the wireless transceiver device #n and the other wireless transceiver device #n', respectively, the associated devices, components and sub-circuits in the operations of Step S11-S17 may change correspondingly, where the AP device 110, the communication control circuit 114, the PHY Rx module 116, the MAC layer Rx module 118 and the non-AP STA device 120 in the operations of Step S11-S17 as described above may be replaced with the non-AP STA device 120, the communication control circuit 124, the PHY Rx module 126, the MAC layer Rx module 128 and the AP device 110, respectively. For brevity, similar descriptions for these embodiments are not repeated in detail here.

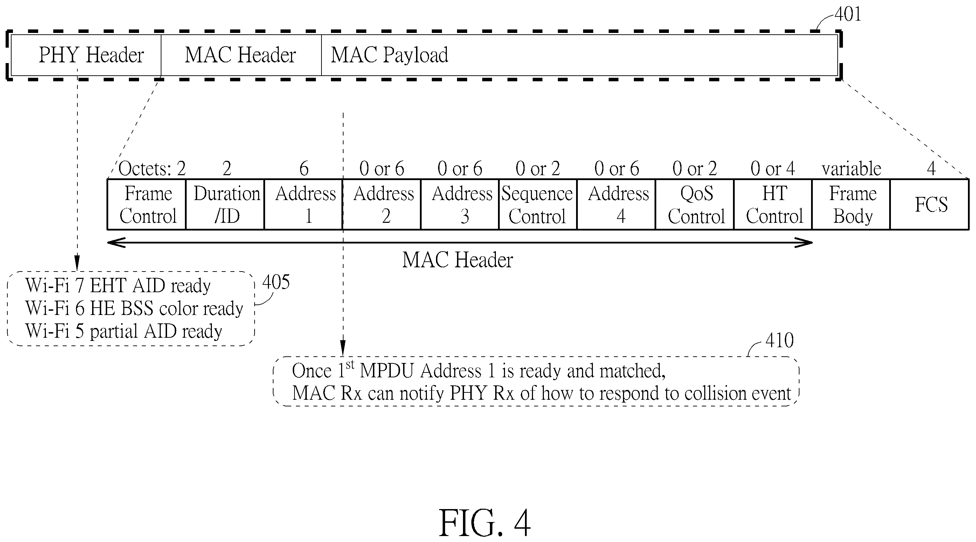

FIG. 4 illustrates an early response control scheme of the method according to an embodiment of the present invention. The PPDU 401 may be taken as an example of any of the first PPDU and the current PPDU mentioned above. Based on the early response control scheme, the MAC layer Rx module in the wireless transceiver device #n, such as the MAC layer Rx module 118 of the AP device 110 or the MAC layer Rx module 128 of the non-AP STA device 120, may be arranged to obtain the first address from the Address 1 field within the MAC header within the payload information of the PPDU 401 according to a predetermined MAC frame format as shown in FIG. 4, for generating the first detection result, and the wireless transceiver device #n may have an early response regarding the collision processing according to the first address carried by the Address 1 field within the MAC header, where the MAC header in the PPDU 401 may conform to the predetermined MAC frame format. Regarding the predetermined MAC frame format shown in FIG. 4, the MAC header in the PPDU 401 may comprise multiple fields such as a Frame Control field, a Duration/ID field, the Address 1 field, an Address Two (Address 2) field, an Address Three (Address 3) field, a Sequence Control field, an Address Four (Address 4) field, a Quality of Service (QoS) Control field and a High Throughput (HT) Control field, having their field lengths which may be measured in unit of octets (or bytes), followed by the Frame Body and the Frame Check Sequence (FCS). The wireless transceiver device #n may perform the MAC-layer-aided collision processing 410, for example, with the associated operations that are the same as or similar to the PHY Rx operations 310 and the MAC Rx operations 320 shown in FIG. 3, in order to utilize the MAC layer Rx module (e.g., the MAC layer Rx module 118 or the MAC layer Rx module 128) within the wireless transceiver device #n to notify the PHY Rx module (e.g., the PHY Rx module 116 or the PHY Rx module 126) within the wireless transceiver device #n of how to respond to the collision event such as the event of the collision between the PPDU 401 and the aforementioned any other PPDU in a situation where the address in the Address 1 field within the MAC header of any MAC protocol data unit (MPDU) (e.g., the first MPDU) among at least one MPDU (e.g., multiple MPDUs) carried by the PPDU 401 is ready for being detected by the MAC layer Rx module and matched with an existing address among all addresses in the aforementioned at least one predetermined wanted address list (labeled "Once 1st MPDU Address 1 is ready and matched" for brevity).

In addition, the wireless transceiver device #n may utilize the PHY Rx module (e.g., the PHY Rx module 116 or the PHY Rx module 126) to generate a second detection result according to the PHY header of the PPDU 401, and refer to at least one detection result among the first detection result and the second detection result for determining whether to continue performing the payload decoding on the PPDU 401, where a first time point at which the first detection result is generated may be later than a second time point at which the second detection result is generated. When detecting that the contradiction between the first detection result and the second detection result is introduced, the PHY Rx module (e.g., the PHY Rx module 116 or the PHY Rx module 126) may ignore the second detection result and refer to the first detection result for determining whether to continue performing the payload decoding on the PPDU 401. Regarding the PHY information 405 that may be obtained from the PHY header for being monitored or detected to generate the second detection result, the Wi-Fi 5 partial AID is ready for the Wi-Fi 5 architecture, the Wi-Fi 6 high efficiency (HE) basic service set (BSS) color is ready for the Wi-Fi 6 architecture, and the Wi-Fi 7 extremely high throughput (EHT) AID is ready for the Wi-Fi 7 architecture. For example, for the Wi-Fi 5 architecture, when detecting that the PHY header has the partial AID matched (so the PPDU 401 should be a PPDU sent to the wireless transceiver device #n), causing the second detection result to indicate that continuing performing the payload decoding on the PPDU 401 is needed, the PHY Rx module of the wireless transceiver device #n may ignore all collision processing with respect to the aforementioned any other PPDU after now; for the Wi-Fi 6 architecture, when detecting that the PHY header has the BSS color matched (so the PPDU 401 should be a PPDU sent to the wireless transceiver device #n), causing the second detection result to indicate that continuing performing the payload decoding on the PPDU 401 is needed, the PHY Rx module of the wireless transceiver device #n may ignore all collision processing with respect to the aforementioned any other PPDU after now; and for the Wi-Fi 7 architecture, when detecting that the PHY header has the AID matched (so the PPDU 401 should be a PPDU sent to the wireless transceiver device #n), causing the second detection result to indicate that continuing performing the payload decoding on the PPDU 401 is needed, the PHY Rx module of the wireless transceiver device #n may ignore all collision processing with respect to the aforementioned any other PPDU after now.

As the PHY header is not as robust as the MAC header, the PHY Rx module of the wireless transceiver device #n may only rely on the PHY header before the MAC or MPDU information (e.g., the MAC header) is decoded, and more particularly, if the contradiction between the first detection result based on the MAC header and the second detection result based on the PHY header is introduced, ignore the second detection result and refer to the first detection result for determining whether to continue performing the payload decoding on the PPDU 401. For brevity, similar descriptions for this embodiment are not repeated in detail here.

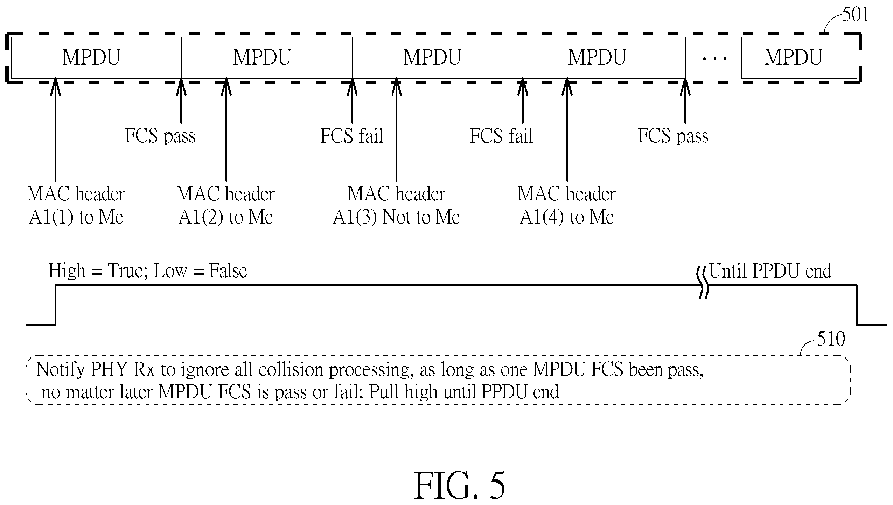

FIG. 5 illustrates a first MAC-layer-aided collision processing and signaling control scheme of the method according to an embodiment of the present invention. The PPDU 501 carrying multiple MPDUs {MPDU(i) | i = 1, 2, 3, 4, ...} such as the MPDUs {MPDU(1), MPDU(2), MPDU(3), MPDU(4), ...} may be taken as an example of any of the first PPDU and the current PPDU mentioned above. Based on the first MAC-layer-aided collision processing and signaling control scheme, a first signal such as the signal shown in the lower half part of FIG. 5 may be transmitted from the MAC layer Rx module (e.g., the MAC layer Rx module 118 or the MAC layer Rx module 128) of the wireless transceiver device #n to the PHY Rx module (e.g., the PHY Rx module 116 or the PHY Rx module 126) of the wireless transceiver device #n via the bus (e.g., the data bus), for carrying the first detection result, where the wireless transceiver device #n may be arranged to refer to the first signal to selectively ignore any collision processing with respect to at least one other PPDU during decoding the MPDUs {MPDU(i) | i = 1, 2, 3, 4, ...} within the PPDU 501 until the end of the PPDU 501 is reached.

In addition, the wireless transceiver device #n may perform the MAC-layer-aided collision processing 510, for example, with the associated operations that are the same as or similar to the PHY Rx operations 310 and the MAC Rx operations 320 shown in FIG. 3, to selectively pull the first signal high or low in real time according to whether the address A1(i) (e.g., the i^{th} address A1(i) among the addresses {A1(i) | i = 1, 2, 3, 4, ... } such as the addresses {A1(1), A1(2), A1(3), A1(4), ...}) in the Address 1 field of the MAC header of the i^{th} MPDU MPDU(i) within the PPDU 501 is in the aforementioned at least one predetermined wanted address list (labeled "to Me" for brevity) or not (labeled "Not to Me" for brevity) and whether the frame check result of the frame check based on the FCS of the i^{th} MPDU MPDU(i) within the PPDU 501 indicates that the frame check is successful (labeled "FCS pass" for brevity) or unsuccessful (labeled "FCS fail" for brevity), and more particularly, utilize the MAC layer Rx module (e.g., the MAC layer Rx module 118 or the MAC layer Rx module 128) within the wireless transceiver device #n to notify the PHY Rx module (e.g., the PHY Rx module 116 or the PHY Rx module 126) within the wireless transceiver device #n via the first signal to ignore all collision processing, as long as the frame check result of the frame check based on the FCS of one MPDU (e.g., the MPDU MPDU(i) with the address A1(i) being in the aforementioned at least one predetermined wanted address list) indicates that the frame check is successful, no matter whether any frame check result of another frame check based on the FCS of any subsequent MPDU indicates that the other frame check is successful or not (labeled "one MPDU FCS been pass, no matter later MPDU FCS is pass or fail" for brevity), and pull the first signal high until the PPDU 501 ends.

As shown in FIG. 5, the MAC layer Rx module (e.g., the MAC layer Rx module 118 or the MAC layer Rx module 128) within the wireless transceiver device #n may dynamically pull the first signal high or low, for notifying the PHY Rx module (e.g., the PHY Rx module 116 or the PHY Rx module 126) within the wireless transceiver device #n of whether to continue performing the payload decoding on the PPDU 501, where the high level of the first signal may represent the True logic state indicating that the PHY Rx module should continue performing the payload decoding on the PPDU 501, and the low level of the first signal may represent the False logic state indicating that the PHY Rx module should not continue (or should temporarily stop) performing the payload decoding on the PPDU 501, for starting processing the aforementioned any other PPDU if the collision between the PPDU 501 and the aforementioned any other PPDU is detected, but the present invention is not limited thereto. For example, when the first signal shown in FIG. 5 is implemented as being inverted, the low level thereof may represent the True logic state indicating that the PHY Rx module should continue performing the payload decoding on the PPDU 501, and the high level thereof may represent the False logic state indicating that the PHY Rx module should not continue performing the payload decoding on the PPDU 501. For brevity, similar descriptions for this embodiment are not repeated in detail here.

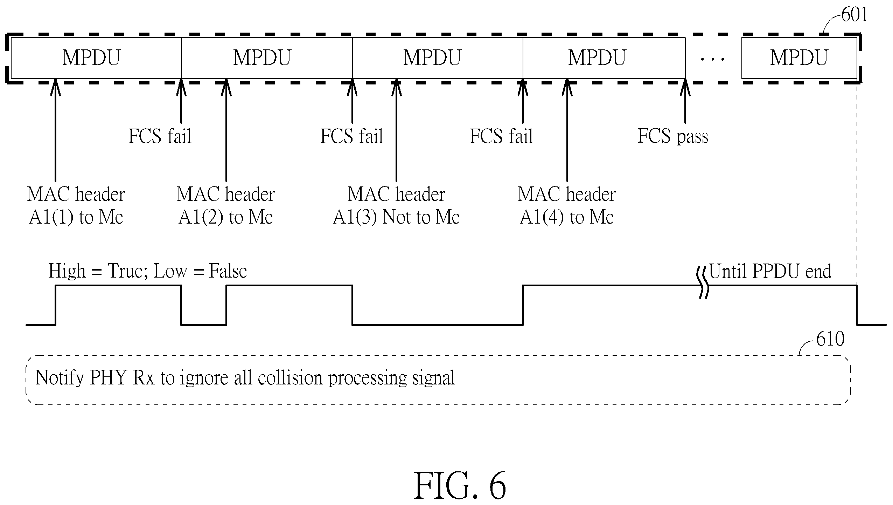

FIG. 6 illustrates a second MAC-layer-aided collision processing and signaling control scheme of the method according to an embodiment of the present invention. The PPDU 601 carrying multiple MPDUs {MPDU(i) | i = 1, 2, 3, 4, ...} such as the MPDUs {MPDU(1), MPDU(2), MPDU(3), MPDU(4), ...} may be taken as an example of any of the first PPDU and the current PPDU mentioned above. Based on the second MAC-layer-aided collision processing and signaling control scheme, the first signal such as the signal shown in the lower half part of FIG. 6 may be transmitted from the MAC layer Rx module (e.g., the MAC layer Rx module 118 or the MAC layer Rx module 128) of the wireless transceiver device #n to the PHY Rx module (e.g., the PHY Rx module 116 or the PHY Rx module 126) of the wireless transceiver device #n via the bus (e.g., the data bus), for carrying the first detection result, where the wireless transceiver device #n may be arranged to refer to the first signal to selectively ignore any collision processing with respect to at least one other PPDU during decoding the MPDUs {MPDU(i) | i = 1, 2, 3, 4, ...} within the PPDU 601 until the end of the PPDU 601 is reached.

In addition, the wireless transceiver device #n may perform the MAC-layer-aided collision processing 610, for example, with the associated operations that are the same as or similar to the PHY Rx operations 310 and the MAC Rx operations 320 shown in FIG. 3, to selectively pull the first signal high or low in real time according to whether the address A1(i) (e.g., the i^{th} address A1(i) among the addresses {A1(i) | i = 1, 2, 3, 4, ... } such as the addresses {A1(1), A1(2), A1(3), A1(4), ...}) in the Address 1 field of the MAC header of the i^{th} MPDU MPDU(i) within the PPDU 601 is in the aforementioned at least one predetermined wanted address list (labeled "to Me" for brevity) or not (labeled "Not to Me" for brevity) and whether the frame check result of the frame check based on the FCS of the i^{th} MPDU MPDU(i) within the PPDU 601 indicates that the frame check is successful (labeled "FCS pass" for brevity) or unsuccessful (labeled "FCS fail" for brevity), and more particularly, utilize the MAC layer Rx module (e.g., the MAC layer Rx module 118 or the MAC layer Rx module 128) within the wireless transceiver device #n to notify the PHY Rx module (e.g., the PHY Rx module 116 or the PHY Rx module 126) within the wireless transceiver device #n via the first signal to ignore all collision processing of the other PPDU(s), as long as the frame check result of the frame check based on the FCS of one MPDU (e.g., the MPDU MPDU(i) with the address A1(i) being in the aforementioned at least one predetermined wanted address list) indicates that the frame check is successful, no matter whether any frame check result of another frame check based on the FCS of any subsequent MPDU indicates that the other frame check is successful or not, and pull the first signal high until the PPDU 601 ends.

As shown in FIG. 6, the MAC layer Rx module (e.g., the MAC layer Rx module 118 or the MAC layer Rx module 128) within the wireless transceiver device #n may dynamically pull the first signal high or low, for notifying the PHY Rx module (e.g., the PHY Rx module 116 or the PHY Rx module 126) within the wireless transceiver device #n of whether to continue performing the payload decoding on the PPDU 601, where the high level of the first signal may represent the True logic state indicating that the PHY Rx module should continue performing the payload decoding on the PPDU 601, and the low level of the first signal may represent the False logic state indicating that the PHY Rx module should not continue (or should temporarily stop) performing the payload decoding on the PPDU 601, for starting processing the aforementioned any other PPDU if the collision between the PPDU 601 and the aforementioned any other PPDU is detected, but the present invention is not limited thereto. For example, when the first signal shown in FIG. 6 is implemented as being inverted, the low level thereof may represent the True logic state indicating that the PHY Rx module should continue performing the payload decoding on the PPDU 601, and the high level thereof may represent the False logic state indicating that the PHY Rx module should not continue performing the payload decoding on the PPDU 601. For brevity, similar descriptions for this embodiment are not repeated in detail here.

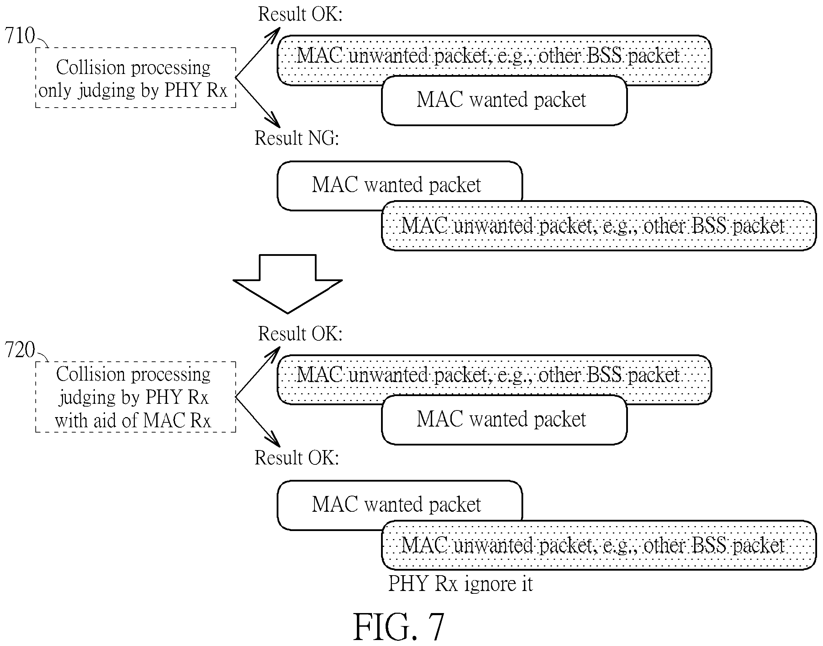

FIG. 7 illustrates, in the lower half part thereof, some processing results of the multi-layer hybrid control scheme shown in FIG. 3 according to an embodiment of the present invention, where some processing results of a single-layer PHY control scheme may be illustrated in the upper half part of FIG. 7 for better comprehension. Assume that one or more functions of the wireless communication system 100 may be temporarily disabled to allow the AP device 110 and the non-AP STA device 120 to operate according to the single-layer PHY control scheme shown in the upper half part of FIG. 7, but the present invention is not limited thereto. Based on the single-layer PHY control scheme, the wireless transceiver device #n may perform buggy collision processing 710 only judging by the PHY Rx module to obtain a processing result which may be okay (OK) or not good (NG), depending on the timing of receiving a MAC wanted packet such as a packet from the other wireless transceiver device #n' within the same BSS and a MAC unwanted packet such as any packet from any other BSS (or "the other BSS packet"). If the MAC unwanted packet (e.g., the other BSS packet) is received before the MAC wanted packet is received, the processing result would be OK; otherwise, the processing result is NG.

As shown in the lower half part of FIG. 7, the wireless communication system 100 (or the AP device 110 and the non-AP STA device 120 therein) may operate according to the multi-layer hybrid control scheme to achieve better overall performance, and more particularly, perform the enhanced collision processing 720 judging by the PHY Rx module with the aid of MAC layer Rx module to obtain a processing result which is always OK, no matter whether the MAC unwanted packet (e.g., the other BSS packet) is received before or after the MAC wanted packet is received. For brevity, similar descriptions for this embodiment are not repeated in detail here.

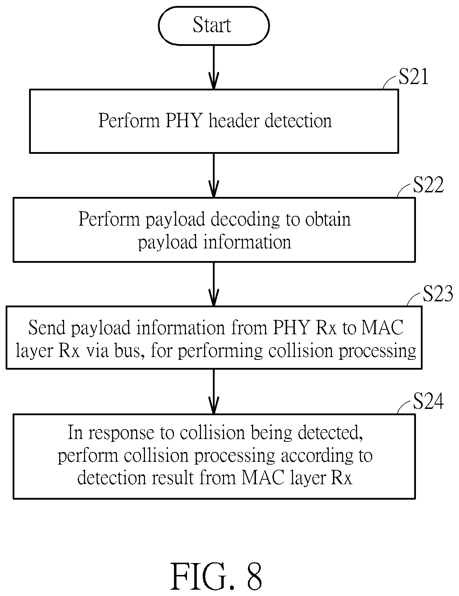

FIG. 8 illustrates a working flow of the method according to an embodiment of the present invention. The method can be applied to the wireless communication system 100, and more particularly, can be applied to the wireless transceiver device #n and the other wireless transceiver device #n', such as the AP device 110 and the non-AP STA device 120, or the AP device 110 and the other AP device among the multiple AP devices {110}, but the present invention is not limited thereto.

In Step S21, the AP device 110 (or the communication control circuit 114 therein) may utilize the PHY Rx module 116 to perform the PHY header detection on the current PPDU received via the communication circuit 114 from the non-AP STA device 120. For example, the operation of Step S21 may comprise the operation of Step S11 shown in FIG. 3, and more particularly, may comprise the operations of Steps S11 and S12 shown in FIG. 3.

In Step S22, the AP device 110 (or the communication control circuit 114 therein) may utilize the PHY Rx module 116 to perform the payload decoding on the current PPDU to obtain the payload information from the current PPDU. For example, the operation of Step S22 may comprise the operation of Step S13 shown in FIG. 3.

In Step S23, the AP device 110 (or the communication control circuit 114 therein) may utilize the PHY Rx module 116 to send the payload information of the current PPDU from the PHY Rx module 116 to the MAC layer Rx module 118 via the bus (e.g., the data bus) between the PHY Rx module 116 and the MAC layer Rx module 118, for performing the collision processing. For example, at least one portion of the operation of Step S22 and at least one portion of the operation of Step S23 may be performed at the same time, where the operation of Step S23 may comprise the operation of Step S14 shown in FIG. 3.

In Step S24, in response to the collision between the current PPDU and the aforementioned any other PPDU being detected, the AP device 110 (or the communication control circuit 114 therein) may utilize the PHY Rx module 116 to perform the collision processing according to the latest detection result such as the latest MAC-header-related detection result from the MAC layer Rx module 118, for determining whether to continue performing the payload decoding on the current PPDU. For example, the operation of Step S24 may comprise the operation of Step S17 shown in FIG. 3, and more particularly, may comprise the operations of Steps S16 and S17 shown in FIG. 3.

For better comprehension, the method may be illustrated with the working flow shown in FIG. 8, but the present invention is not limited thereto. According to some embodiments, one or more steps may be added, deleted, or changed in the working flow shown in FIG. 8. More particularly, when the non-AP STA device 120 and the AP device 110 are taken as examples of the wireless transceiver device #n and the other wireless transceiver device #n', respectively, the associated devices, components and sub-circuits in the operations of Step S21-S24 may change correspondingly, where the AP device 110, the communication control circuit 114, the PHY Rx module 116, the MAC layer Rx module 118 and the non-AP STA device 120 in the operations of Step S21-S24 as described above may be replaced with the non-AP STA device 120, the communication control circuit 124, the PHY Rx module 126, the MAC layer Rx module 128 and the AP device 110, respectively. For brevity, similar descriptions for these embodiments are not repeated in detail here.

Those skilled in the art will readily observe that numerous modifications and alterations of the device and method may be made while retaining the teachings of the invention. Accordingly, the above disclosure should be construed as limited only by the appended claims.

## Claims

1. A method for performing collision processing with aid of medium access control, in the following also referred to as MAC, layer detection in a wireless communication system, wherein the wireless communication system comprises a wireless transceiver device and at least another device, the method comprising:
performing physical layer, in the following also referred to as PHY, header detection on a first PHY protocol data unit, in the following also referred to as PPDU, received via at least one communication circuit within the wireless transceiver device from the other device (S21);
starting performing payload decoding on the first PPDU to obtain at least one portion of payload information from the first PPDU (S22);
and **characterized by**:
sending the at least one portion of the payload information of the first PPDU from a PHY receiving, in the following also referred to as Rx, module within the at least one communication circuit to a MAC layer Rx module within the at least one communication circuit via a bus, for performing the collision processing, by the PHY Rx module, with aid of the MAC layer Rx module (S23); and
in response to collision, in at least timing of receiving, between the first PPDU and another PPDU being detected, performing the collision processing according to a first detection result from the MAC layer Rx module, for determining whether to continue performing the payload decoding on the first PPDU (S24).

2. The method of claim 1, **characterized in that** the first detection result represents a MAC-header-related detection result; and the method further comprises:
utilizing the MAC layer Rx module to perform MAC header decoding on the payload information of the first PPDU to obtain a MAC header from the payload information of the first PPDU; and
utilizing the MAC layer Rx module to perform a MAC address detection on the MAC header to generate the MAC-header-related detection result, for being returned to the PHY Rx module;
wherein the PHY Rx module is arranged to perform the collision processing according to the MAC-header-related detection result.

3. The method of claim 2, **characterized in that** the MAC address detection comprises detecting whether a first address in the MAC header is in at least one predetermined wanted address list or not; and the MAC layer Rx module is arranged to return the MAC-header-related detection result to the PHY Rx module, for indicating whether the first address in the MAC header is in the at least one predetermined wanted address list or not.

4. The method of claim 3, **characterized in that** the MAC layer Rx module is arranged to obtain the first address from an address one, in the following also referred to as Address 1, field within the MAC header.

5. The method of any one of claims 1 to 4, **characterized in that** performing the collision processing according to the first detection result from the MAC layer Rx module further comprises:
if the first detection result indicates that a first address in a MAC header within the payload information of the first PPDU is in at least one predetermined wanted address list, utilizing the PHY Rx module to continue performing the payload decoding on the first PPDU; otherwise, utilizing the PHY Rx module to start processing the other PPDU.

6. The method of claim 5, **characterized in that** utilizing the PHY Rx module to start processing the other PPDU comprises utilizing the PHY Rx module to start performing the PHY header detection on the other PPDU.

7. The method of any one of claims 1 to 6, **characterized in that** the MAC layer Rx module is arranged to obtain a/the first address from an/the Address 1 field within a/the MAC header within the payload information of the first PPDU, for generating the first detection result; and the wireless transceiver device is arranged to have an early response, the early response of responding to the collision between the first PPDU and the other PPDU, as early as the first detection result is generated, regarding the collision processing according to the first address carried by the Address 1 field within the MAC header.

8. The method of any one of claims 1 to 7, **characterized in that** the MAC layer Rx module is arranged to obtain a/the first address from an/the Address 1 field within a/the MAC header within the payload information of the first PPDU according to a predetermined MAC frame format, for generating the first detection result, wherein the MAC header conforms to the predetermined MAC frame format.

9. The method of any one of claims 1 to 8, **characterized in that** the MAC layer Rx module is arranged to obtain a/the first address from an/the Address 1 field within a/the MAC header within the payload information of the first PPDU, for generating the first detection result; and the wireless transceiver device is arranged to utilize the PHY Rx module to generate a second detection result according to a PHY header of the first PPDU, and refer to at least one detection result among the first detection result and the second detection result for determining whether to continue performing the payload decoding on the first PPDU, wherein in response to detecting that contradiction between the first detection result and the second detection result is introduced, the PHY Rx module is arranged to ignore the second detection result and refer to the first detection result for determining whether to continue performing the payload decoding on the first PPDU.

10. The method of any one of claims 1 to 9, **characterized in that** a first signal is transmitted from the MAC layer Rx module to the PHY Rx module via the bus, for carrying the first detection result; and the wireless transceiver device is arranged to refer to the first signal to selectively ignore any processing with respect to at least one other PPDU during decoding at least one MAC protocol data unit, in the following also referred to as MPDU, within the first PPDU until an end of the first PPDU is reached, wherein the first PPDU carries the at least one MPDU.

11. An access point, in the following also referred to as AP, device (110), for performing collision processing with aid of medium access control, in the following also referred to as MAC, layer detection in a wireless communication system, the AP device (110) comprising:
a processing circuit (112), arranged to control operations of the AP device (110); and
at least one communication control circuit (114), coupled to the processing circuit (112), arranged to perform communication control, wherein the at least one communication control circuit (114) is arranged to perform wireless communication operations with at least another device (120) within the wireless communication system for the AP device (110);
wherein:
the AP device (110) is arranged to perform physical layer, in the following also referred to as PHY, header detection on a first PHY protocol data unit, in the following also referred to as PPDU, received via the at least one communication circuit from the other device (120);
the AP device (110) is arranged to start performing payload decoding on the first PPDU to obtain at least one portion of payload information from the first PPDU;
and **characterized in that**:
the AP device (110) is arranged to send the at least one portion of the payload information of the first PPDU from a PHY receiving, in the following also referred to as Rx, module (116) within the at least one communication circuit (114) to a MAC layer Rx module (118) within the at least one communication circuit (114) via a bus, for performing the collision processing, by the PHY Rx module (116), with aid of the MAC layer Rx module (118); and
in response to collision, in at least timing of receiving, between the first PPDU and another PPDU being detected, the AP device (110) is arranged to perform the collision processing according to a first detection result from the MAC layer Rx module (118), for determining whether to continue performing the payload decoding on the first PPDU.

12. A non-access-point station, in the following also referred to as non-AP STA, device (120), for performing collision processing with aid of medium access control, in the following also referred to as MAC, layer detection in a wireless communication system, the non-AP STA device (120) comprising:
a processing circuit (122), arranged to control operations of the non-AP STA device; (120) and
at least one communication control circuit (124), coupled to the processing circuit (122), arranged to perform communication control, wherein the at least one communication control circuit (124) is arranged to perform wireless communication operations with at least another device (110) within the wireless communication system for the non-AP STA device (120);
wherein:
the non-AP STA device (120) is arranged to perform physical layer, in the following also referred to as PHY, header detection on a first PHY protocol data unit, in the following also referred to as PPDU, received via the at least one communication circuit from the other device (110);
the non-AP STA device (120) is arranged to start performing payload decoding on the first PPDU to obtain at least one portion of payload information from the first PPDU;
and **characterized in that**:
the non-AP STA device (120) is arranged to send the at least one portion of the payload information of the first PPDU from a PHY receiving, in the following also referred to as Rx, module (126) within the at least one communication circuit (124) to a MAC layer Rx module (128) within the at least one communication circuit (124) via a bus, for performing the collision processing, by the PHY Rx module (126), with aid of the MAC layer Rx module (128); and
in response to collision, in at least timing of receiving, between the first PPDU and another PPDU being detected, the non-AP STA device (120) is arranged to perform the collision processing according to a first detection result from the MAC layer Rx module (128), for determining whether to continue performing the payload decoding on the first PPDU.

## Patentansprüche

1. Verfahren zum Durchführen einer Kollisionsverarbeitung mithilfe einer Medienzugriffssteuerung im Folgenden auch als MAC bezeichnet, -Schicht-Detektion in einem Drahtloskommunikation-System, wobei das Drahtloskommunikation-System eine Drahtlostransceiver-Vorrichtung und mindestens eine andere Vorrichtung umfasst, wobei das Verfahren umfasst:
Durchführen einer physikalische Schicht, im Folgenden auch als PHY bezeichnet, -Header-Detektion an einer ersten PHY-Protokolldateneinheit, im Folgenden auch als PPDU bezeichnet, die über mindestens eine Kommunikationsschaltung innerhalb der Drahtlostransceiver-Vorrichtung von der anderen Vorrichtung empfangen wird (S21);
Starten des Durchführens einer Nutzlastdecodierung an der ersten PPDU, um mindestens einen Teil von Nutzlastinformationen von der ersten PPDU zu erhalten (S22);
und **gekennzeichnet durch**:
Senden des mindestens einen Teils der Nutzlastinformationen der ersten PPDU von einem PHY- Empfang, im Folgenden auch als Rx bezeichnet, -Modul innerhalb der mindestens einen Kommunikationsschaltung an ein MAC-Schicht-Rx-Modul innerhalb der mindestens einen Kommunikationsschaltung über einen Bus, um die Kollisionsverarbeitung durch das PHY-Rx-Modul mithilfe des MAC-Schicht-Rx-Moduls durchzuführen (S23); und
als Reaktion auf eine Kollision, in mindestens einem Zeitpunkt des Empfangs, zwischen der ersten PPDU und einer anderen PPDU, die detektiert wird, Durchführen der Kollisionsverarbeitung gemäß einem ersten Detektionsergebnis von dem MAC-Schicht-Rx-Modul, um zu bestimmen, ob das Durchführen der Nutzlastdecodierung an der ersten PPDU fortgesetzt werden soll (S24).

2. Verfahren nach Anspruch 1, **dadurch gekennzeichnet, dass** das erste Detektionsergebnis ein MAC-Header-bezogenes Detektionsergebnis darstellt; und das Verfahren ferner umfasst:
Verwenden des MAC-Schicht-Rx-Moduls, um eine MAC-Header-Decodierung an den Nutzlastinformationen der ersten PPDU durchzuführen, um einen MAC-Header aus den Nutzlastinformationen der ersten PPDU zu erhalten; und
Verwenden des MAC-Schicht-Rx-Moduls, um eine MAC-Adresse-Detektion an dem MAC-Header durchzuführen, um das MAC-Header-bezogene Detektionsergebnis zu erzeugen, um an das PHY-Rx-Modul zurückgegeben zu werden;
wobei das PHY-Rx-Modul angeordnet ist, um die Kollisionsverarbeitung gemäß dem MAC-Header-bezogenen Detektionsergebnis durchzuführen.

3. Verfahren nach Anspruch 2, **dadurch gekennzeichnet, dass** die MAC-Adresse-Detektion ein Detektieren umfasst, ob eine erste Adresse in dem MAC-Header in mindestens einer vorbestimmten gewünschten Adressenliste ist oder nicht; und das MAC-Schicht-Rx-Modul angeordnet ist, um das MAC-Header-bezogene Detektionsergebnis an das PHY-Rx-Modul zurückzugeben, um anzuzeigen, ob die erste Adresse in dem MAC-Header in der mindestens einen vorbestimmten gewünschten Adressenliste ist oder nicht.

4. Verfahren nach Anspruch 3, **dadurch gekennzeichnet, dass** das MAC-Schicht-Rx-Modul angeordnet ist, um die erste Adresse aus einem Adresse-Eins, im Folgenden auch als Adresse-1 bezeichnet, -Feld innerhalb des MAC-Headers zu erhalten.

5. Verfahren nach einem der Ansprüche 1 bis 4, **dadurch gekennzeichnet, dass** das Durchführen der Kollisionsverarbeitung gemäß dem ersten Detektionsergebnis von dem MAC-Schicht-Rx-Modul ferner umfasst:
wenn das erste Detektionsergebnis anzeigt, dass eine erste Adresse in einem MAC-Header innerhalb der Nutzlastinformationen der ersten PPDU in mindestens einer vorbestimmten gewünschten Adressenliste ist, Verwenden des PHY-Rx-Moduls, um das Durchführen der Nutzlastdecodierung an der ersten PPDU fortzusetzen; andernfalls Verwenden des PHY-Rx-Moduls, um die Verarbeitung der anderen PPDU zu starten.

6. Verfahren nach Anspruch 5, **dadurch gekennzeichnet, dass** das Verwenden des PHY-Rx-Moduls, um die Verarbeitung der anderen PPDU zu starten, ein Verwenden des PHY-Rx-Moduls umfasst, um das Durchführen der PHY-Header-Detektion an der anderen PPDU zu starten.

7. Verfahren nach einem der Ansprüche 1 bis 6, **dadurch gekennzeichnet, dass** das MAC-Schicht-Rx-Modul angeordnet ist, um eine/die erste Adresse aus einem/dem Adresse-1-Feld innerhalb eines/des MAC-Headers innerhalb der Nutzlastinformationen der ersten PPDU zu erhalten, um das erste Detektionsergebnis zu erzeugen; und die Drahtlostransceiver-Vorrichtung angeordnet ist, um eine frühe Antwort zu haben, wobei die frühe Antwort ein Antworten auf die Kollision zwischen der ersten PPDU und der anderen PPDU, so früh wie das erste Detektionsergebnis erzeugt wird, hinsichtlich der Kollisionsverarbeitung gemäß der ersten Adresse, die durch das Adresse-1-Feld innerhalb des MAC-Headers getragen wird, aufweist.

8. Verfahren nach einem der Ansprüche 1 bis 7, **dadurch gekennzeichnet, dass** das MAC-Schicht-Rx-Modul angeordnet ist, um eine/die erste Adresse aus einem/dem Adresse-1-Feld innerhalb eines/des MAC-Headers innerhalb der Nutzlastinformationen der ersten PPDU gemäß einem vorbestimmten MAC-Rahmen-Format zu erhalten, um das erste Detektionsergebnis zu erzeugen, wobei der MAC-Header dem vorbestimmten MAC-Rahmen-Format entspricht.

9. Verfahren nach einem der Ansprüche 1 bis 8, **dadurch gekennzeichnet, dass** das MAC-Schicht-Rx-Modul angeordnet ist, um eine/die erste Adresse aus einem/dem Adresse-1-Feld innerhalb eines/des MAC-Headers innerhalb der Nutzlastinformationen der ersten PPDU zu erhalten, um das erste Detektionsergebnis zu erzeugen; und die Drahtlostransceiver-Vorrichtung angeordnet ist, um das PHY-Rx-Modul zu verwenden, um ein zweites Detektionsergebnis gemäß einem PHY-Header der ersten PPDU zu erzeugen, und sich auf mindestens ein Detektionsergebnis aus dem ersten Detektionsergebnis und dem zweiten Detektionsergebnis zu beziehen, um zu bestimmen, ob das Durchführen der Nutzlastdecodierung an der ersten PPDU fortgesetzt werden soll, wobei als Reaktion auf ein Detektieren, dass ein Widerspruch zwischen dem ersten Detektionsergebnis und dem zweiten Detektionsergebnis eingeführt wird, das PHY-Rx-Modul angeordnet ist, um das zweite Detektionsergebnis zu ignorieren und sich auf das erste Detektionsergebnis zu beziehen, um zu bestimmen, ob das Durchführen der Nutzlastdecodierung an der ersten PPDU fortgesetzt werden soll.

10. Verfahren nach einem der Ansprüche 1 bis 9, **dadurch gekennzeichnet, dass** ein erstes Signal von dem MAC-Schicht-Rx-Modul an das PHY-Rx-Modul über den Bus übertragen wird, um das erste Detektionsergebnis zu tragen; und die Drahtlostransceiver-Vorrichtung angeordnet ist, um sich auf das erste Signal zu beziehen, um selektiv jegliche Verarbeitung in Bezug auf mindestens eine andere PPDU während eines Decodierens mindestens einer MAC-Protokolldateneinheit, im Folgenden auch als MPDU bezeichnet, innerhalb der ersten PPDU zu ignorieren, bis ein Ende der ersten PPDU erreicht ist, wobei die erste PPDU die mindestens eine MPDU trägt.

11. Zugangspunkt, im Folgenden auch als AP bezeichnet, -Vorrichtung (110) zum Durchführen einer Kollisionsverarbeitung mithilfe einer Medienzugriffssteuerung, im Folgenden auch als MAC bezeichnet, -Schicht-Detektion in einem Drahtloskommunikation-System, wobei die AP-Vorrichtung (110) umfasst:
eine Verarbeitungsschaltung (112), die angeordnet ist, um Operationen der AP-Vorrichtung (110) zu steuern; und
mindestens eine Kommunikationssteuerschaltung (114), die mit der Verarbeitungsschaltung (112) gekoppelt ist, die angeordnet ist, um eine Kommunikationssteuerung durchzuführen, wobei die mindestens eine Kommunikationssteuerschaltung (114) angeordnet ist, um Drahtloskommunikation-Operationen mit mindestens einer anderen Vorrichtung (120) innerhalb des Drahtloskommunikation-Systems für die AP-Vorrichtung (110) durchzuführen;
wobei:
die AP-Vorrichtung (110) angeordnet ist, um eine physikalische Schicht, im Folgenden auch als PHY bezeichnet, -Header-Detektion an einer ersten PHY-Protokolldateneinheit, im Folgenden auch als PPDU bezeichnet, durchzuführen, die über die mindestens eine Kommunikationsschaltung von der anderen Vorrichtung (120) empfangen wird;
die AP-Vorrichtung (110) angeordnet ist, um das Durchführen einer Nutzlastdecodierung an der ersten PPDU zu starten, um mindestens einen Teil von Nutzlastinformationen von der ersten PPDU zu erhalten;
und **dadurch gekennzeichnet, dass**:
die AP-Vorrichtung (110) angeordnet ist, um den mindestens einen Teil der Nutzlastinformationen der ersten PPDU von einem PHY- Empfang, im Folgenden auch als Rx bezeichnet, -Modul (116) innerhalb der mindestens einen Kommunikationsschaltung (114) an ein MAC-Schicht-Rx-Modul (118) innerhalb der mindestens einen Kommunikationsschaltung (114) über einen Bus zu senden, um die Kollisionsverarbeitung durch das PHY-Rx-Modul (116) mithilfe des MAC-Schicht-Rx-Moduls (118) durchzuführen; und
als Reaktion auf eine Kollision, in mindestens einem Zeitpunkt des Empfangs, zwischen der ersten PPDU und einer anderen PPDU, die detektiert wird, die AP-Vorrichtung (110) angeordnet ist, um die Kollisionsverarbeitung gemäß einem ersten Detektionsergebnis von dem MAC-Schicht-Rx-Modul (118) durchzuführen, um zu bestimmen, ob das Durchführen der Nutzlastdecodierung an der ersten PPDU fortgesetzt werden soll.

12. Nicht-Zugangspunkt-Station, im Folgenden auch als Nicht-AP-STA bezeichnet, -Vorrichtung (120) zum Durchführen einer Kollisionsverarbeitung mithilfe einer Medienzugriffssteuerung, im Folgenden auch als MAC bezeichnet, -Schicht-Detektion in einem Drahtloskommunikation-System, wobei die Nicht-AP-STA-Vorrichtung (120) umfasst:
eine Verarbeitungsschaltung (122), die angeordnet ist, um Operationen der Nicht-AP-STA-Vorrichtung (120) zu steuern; und
mindestens eine Kommunikationssteuerschaltung (124), die mit der Verarbeitungsschaltung (122) gekoppelt ist, die angeordnet ist, um eine Kommunikationssteuerung durchzuführen, wobei die mindestens eine Kommunikationssteuerschaltung (124) angeordnet ist, um Drahtloskommunikation-Operationen mit mindestens einer anderen Vorrichtung (110) innerhalb des Drahtloskommunikation-Systems für die Nicht-AP-STA-Vorrichtung (120) durchzuführen;
wobei:
die Nicht-AP-STA-Vorrichtung (120) angeordnet ist, um eine physikalische Schicht, im Folgenden auch als PHY bezeichnet, -Header-Detektion an einer ersten PHY-Protokolldateneinheit, im Folgenden auch als PPDU bezeichnet, durchzuführen, die über die mindestens eine Kommunikationsschaltung von der anderen Vorrichtung (110) empfangen wird;
die Nicht-AP-STA-Vorrichtung (120) angeordnet ist, um das Durchführen einer Nutzlastdecodierung an der ersten PPDU zu starten, um mindestens einen Teil von Nutzlastinformationen von der ersten PPDU zu erhalten;
und **dadurch gekennzeichnet, dass**:
die Nicht-AP-STA-Vorrichtung (120) angeordnet ist, um den mindestens einen Teil der Nutzlastinformationen der ersten PPDU von einem PHY-Empfang, im Folgenden auch als Rx bezeichnet, -Modul (126) innerhalb der mindestens einen Kommunikationsschaltung (124) an ein MAC-Schicht-Rx-Modul (128) innerhalb der mindestens einen Kommunikationsschaltung (124) über einen Bus zu senden, um die Kollisionsverarbeitung durch das PHY-Rx-Modul (126) mithilfe des MAC-Schicht-Rx-Moduls (128) durchzuführen; und
als Reaktion auf eine Kollision, in mindestens einem Zeitpunkt des Empfangs, zwischen der ersten PPDU und einer anderen PPDU, die detektiert wird, die Nicht-AP-STA-Vorrichtung (120) angeordnet ist, um die Kollisionsverarbeitung gemäß einem ersten Detektionsergebnis von dem MAC-Schicht-Rx-Modul (128) durchzuführen, um zu bestimmen, ob das Durchführen der Nutzlastdecodierung an der ersten PPDU fortgesetzt werden soll.

## Revendications

1. Procédé de réalisation d'un traitement de collision à l'aide d'une détection de couche de contrôle d'accès au support, ci-après également appelée MAC, dans un système de communication sans fil, dans lequel le système de communication sans fil comprend un dispositif émetteur-récepteur sans fil et au moins un autre dispositif, le procédé comprenant :
la réalisation d'une détection d'en-tête de couche physique, ci-après également appelée PHY, sur une première unité de données de protocole PHY, ci-après également appelée PPDU, reçue par l'intermédiaire d'au moins un circuit de communication à l'intérieur du dispositif émetteur-récepteur sans fil en provenance de l'autre dispositif (S21) ;
le démarrage de la réalisation d'un décodage de charge utile sur la première PPDU pour obtenir au moins une partie d'informations de charge utile à partir de la première PPDU (S22) ;
et **caractérisé par** :
l'envoi de l'au moins une partie des informations de charge utile de la première PPDU d'un module de réception, ci-après également appelé Rx, PHY à l'intérieur de l'au moins un circuit de communication à un module Rx de couche MAC à l'intérieur de l'au moins un circuit de communication par l'intermédiaire d'un bus, pour réaliser le traitement de collision, par le module Rx PHY, à l'aide du module Rx de couche MAC (S23) ; et
en réponse à une collision, dans au moins une synchronisation de réception, entre la première PPDU et une autre PPDU qui est détectée, la réalisation du traitement de collision selon un premier résultat de détection provenant du module Rx de couche MAC, pour déterminer s'il faut continuer à réaliser le décodage de charge utile sur la première PPDU (S24).

2. Procédé selon la revendication 1, **caractérisé en ce que** le premier résultat de détection représente un résultat de détection lié à un en-tête MAC ; et le procédé comprend en outre :
l'utilisation du module Rx de couche MAC pour réaliser un décodage d'en-tête MAC sur les informations de charge utile de la première PPDU pour obtenir un en-tête MAC à partir des informations de charge utile de la première PPDU ; et
l'utilisation du module Rx de couche MAC pour réaliser une détection d'adresse MAC sur l'en-tête MAC pour générer le résultat de détection lié à un en-tête MAC, pour être renvoyé au module Rx PHY ;
dans lequel le module Rx PHY est agencé pour réaliser le traitement de collision selon le résultat de détection lié à un en-tête MAC.

3. Procédé selon la revendication 2, **caractérisé en ce que** la détection d'adresse MAC comprend la détection si une première adresse dans l'en-tête MAC est dans au moins une liste d'adresses voulues prédéterminée ou non ; et le module Rx de couche MAC est agencé pour renvoyer le résultat de détection lié à un en-tête MAC au module Rx PHY, pour indiquer si la première adresse dans l'en-tête MAC est dans l'au moins une liste d'adresses voulues prédéterminée ou non.

4. Procédé selon la revendication 3, **caractérisé en ce que** le module Rx de couche MAC est agencé pour obtenir la première adresse à partir d'un champ d'adresse un, ci-après également appelée adresse 1, dans l'en-tête MAC.

5. Procédé selon l'une quelconque des revendications 1 à 4, **caractérisé en ce que** la réalisation du traitement de collision selon le premier résultat de détection provenant du module Rx de couche MAC comprend en outre :
si le premier résultat de détection indique qu'une première adresse dans un en-tête MAC à l'intérieur des informations de charge utile de la première PPDU est dans au moins une liste d'adresses voulues prédéterminée, l'utilisation du module Rx PHY pour continuer à réaliser le décodage de charge utile sur la première PPDU ; sinon, l'utilisation du module Rx PHY pour démarrer le traitement de l'autre PPDU.

6. Procédé selon la revendication 5, **caractérisé en ce que** l'utilisation du module Rx PHY pour démarrer le traitement de l'autre PPDU comprend l'utilisation du module Rx PHY pour démarrer la réalisation de la détection d'en-tête PHY sur l'autre PPDU.

7. Procédé selon l'une quelconque des revendications 1 à 6, **caractérisé en ce que** le module Rx de couche MAC est agencé pour obtenir une/la première adresse à partir d'un/du champ d'adresse 1 à l'intérieur d'un/de l'en-tête MAC à l'intérieur des informations de charge utile de la première PPDU, pour générer le premier résultat de détection ; et le dispositif émetteur-récepteur sans fil est agencé pour avoir une réponse précoce, la réponse précoce consistant à répondre à la collision entre la première PPDU et l'autre PPDU, dès que le premier résultat de détection est généré, concernant le traitement de collision selon la première adresse transportée par le champ d'adresse 1 à l'intérieur de l'en-tête MAC.

8. Procédé selon l'une quelconque des revendications 1 à 7, **caractérisé en ce que** le module Rx de couche MAC est agencé pour obtenir une/la première adresse à partir d'un/du champ d'adresse 1 à l'intérieur d'un/de l'en-tête MAC à l'intérieur des informations de charge utile de la première PPDU selon un format de trame MAC prédéterminé, pour générer le premier résultat de détection, dans lequel l'en-tête MAC est conforme au format de trame MAC prédéterminé.

9. Procédé selon l'une quelconque des revendications 1 à 8, **caractérisé en ce que** le module Rx de couche MAC est agencé pour obtenir une/la première adresse à partir d'un/du champ d'adresse 1 à l'intérieur d'un/de l'en-tête MAC à l'intérieur des informations de charge utile de la première PPDU, pour générer le premier résultat de détection ; et le dispositif émetteur-récepteur sans fil est agencé pour utiliser le module Rx PHY pour générer un second résultat de détection selon un en-tête PHY de la première PPDU, et se référer à au moins un résultat de détection parmi le premier résultat de détection et le second résultat de détection pour déterminer s'il faut continuer à réaliser le décodage de charge utile sur la première PPDU, dans lequel, en réponse à la détection qu'une contradiction entre le premier résultat de détection et le second résultat de détection est introduite, le module Rx PHY est agencé pour ignorer le second résultat de détection et se référer au premier résultat de détection pour déterminer s'il faut continuer à réaliser le décodage de charge utile sur la première PPDU.

10. Procédé selon l'une quelconque des revendications 1 à 9, **caractérisé en ce qu'**un premier signal est transmis du module Rx de couche MAC au module Rx PHY par l'intermédiaire du bus, pour transporter le premier résultat de détection ; et le dispositif émetteur-récepteur sans fil est agencé pour se référer au premier signal pour ignorer sélectivement tout traitement par rapport à au moins une autre PPDU pendant le décodage d'au moins une unité de données de protocole MAC, ci-après également appelée MPDU, à l'intérieur de la première PPDU jusqu'à ce qu'une fin de la première PPDU soit atteinte, dans lequel la première PPDU transporte l'au moins une MPDU.

11. Point d'accès, ci-après également appelé AP, dispositif (110), pour réaliser un traitement de collision à l'aide d'une détection de couche de contrôle d'accès au support, ci-après également appelée MAC, dans un système de communication sans fil, le dispositif AP (110) comprenant :
un circuit de traitement (112), agencé pour contrôler des opérations du dispositif AP (110) ; et
au moins un circuit de contrôle de communication (114), couplé au circuit de traitement (112), agencé pour réaliser un contrôle de communication, dans lequel l'au moins un circuit de contrôle de communication (114) est agencé pour réaliser des opérations de communication sans fil avec au moins un autre dispositif (120) à l'intérieur du système de communication sans fil pour le dispositif AP (110) ;
dans lequel :
le dispositif AP (110) est agencé pour réaliser une détection d'en-tête de couche physique, ci-après également appelée PHY, sur une première unité de données de protocole PHY, ci-après également appelée PPDU, reçue par l'intermédiaire de l'au moins un circuit de communication en provenance de l'autre dispositif (120) ;
le dispositif AP (110) est agencé pour démarrer la réalisation d'un décodage de charge utile sur la première PPDU pour obtenir au moins une partie d'informations de charge utile à partir de la première PPDU ;
et **caractérisé en ce que** :
le dispositif AP (110) est agencé pour envoyer l'au moins une partie des informations de charge utile de la première PPDU d'un module de réception, ci-après également appelé Rx, PHY (116) à l'intérieur de l'au moins un circuit de communication (114) à un module Rx de couche MAC (118) à l'intérieur de l'au moins un circuit de communication (114) par l'intermédiaire d'un bus, pour réaliser le traitement de collision, par le module Rx PHY (116), à l'aide du module Rx de couche MAC (118) ; et
en réponse à une collision, dans au moins une synchronisation de réception, entre la première PPDU et une autre PPDU qui est détectée, le dispositif AP (110) est agencé pour réaliser le traitement de collision selon un premier résultat de détection provenant du module Rx de couche MAC (118), pour déterminer s'il faut continuer à réaliser le décodage de charge utile sur la première PPDU.

12. Dispositif de station sans point d'accès, ci-après également appelée STA sans AP, (120), pour réaliser un traitement de collision à l'aide d'une détection de couche de contrôle d'accès au support, ci-après également appelée MAC, dans un système de communication sans fil, le dispositif STA sans AP (120) comprenant :
un circuit de traitement (122), agencé pour contrôler des opérations du dispositif STA sans AP (120) ; et
au moins un circuit de contrôle de communication (124), couplé au circuit de traitement (122), agencé pour réaliser un contrôle de communication, dans lequel l'au moins un circuit de contrôle de communication (124) est agencé pour réaliser des opérations de communication sans fil avec au moins un autre dispositif (110) à l'intérieur du système de communication sans fil pour le dispositif STA sans AP (120) ;
dans lequel :
le dispositif STA sans AP (120) est agencé pour réaliser une détection d'en-tête de couche physique, ci-après également appelée PHY, sur une première unité de données de protocole PHY, ci-après également appelée PPDU, reçue par l'intermédiaire de l'au moins un circuit de communication en provenance de l'autre dispositif (110) ;
le dispositif STA sans AP (120) est agencé pour démarrer la réalisation d'un décodage de charge utile sur la première PPDU pour obtenir au moins une partie d'informations de charge utile à partir de la première PPDU ;
et **caractérisé en ce que** :
le dispositif STA sans AP (120) est agencé pour envoyer l'au moins une partie des informations de charge utile de la première PPDU d'un module de réception, ci-après également appelé Rx, PHY (126) à l'intérieur de l'au moins un circuit de communication (124) à un module Rx de couche MAC (128) à l'intérieur de l'au moins un circuit de communication (124) par l'intermédiaire d'un bus, pour réaliser le traitement de collision, par le module Rx PHY (126), à l'aide du module Rx de couche MAC (128) ; et
en réponse à une collision, dans au moins une synchronisation de réception, entre la première PPDU et une autre PPDU qui est détectée, le dispositif STA sans AP (120) est agencé pour réaliser le traitement de collision selon un premier résultat de détection provenant du module Rx de couche MAC (128), pour déterminer s'il faut continuer à réaliser le décodage de charge utile sur la première PPDU.
